# EUROPÄISCHE PATENTANMELDUNG

(11) **EP 2 439 701 A1**
(43) Veröffentlichungstag der Anmeldung: **11.04.2012**
(21) Anmeldenummer: 10186909.7
(22) Anmeldetag: 07.10.2010
(51) Int. Cl.: G06T 11/20

(54) **Verfahren zur Visualisierung von Informationen**

(71) Anmelder: Rewoo Technologies AG, 61440 Oberursel (DE)
(72) Erfinder: Schildgen, Werner, Dr., 64342 Seeheim-Jugenheim (DE)
(74) Vertreter: Katscher Habermann Patentanwälte

(57) **Zusammenfassung**

Die Erfindung betrifft ein Verfahren zur Visualisierung von Informationen, die als Datensätze in mindestens einer Datenbank gespeichert sind, wobei Informationen, die ein benutzerspezifisches, nicht von einem Benutzer veränderbares Horizontkriterium sowie ein benutzerspezifisches, durch den Benutzer veränderbares Anzeigekriterium erfüllen, gemäß einer vorgegebenen Anzeigeregel mittels eines elektronischen Anzeigegeräts (26) angezeigt werden. Die Informationen werden als Segmente mindestens zweier Bänder in einer ersten Ansicht dargestellt werden, wobei die Bänder längs eines Rands einer zusammenhängenden Fläche angeordnet sind und die mindestens zwei Bänder den Rand weitestgehend oder vollständig umschließen.

## Beschreibung

Die Erfindung betrifft ein Verfahren zur Visualisierung von Informationen, die als Datensätze in mindestens einer Datenbank gespeichert sind, wobei Informationen, die ein benutzerspezifisches, nicht von einem Benutzer veränderbares Horizontkriterium sowie ein benutzerspezifisches, durch den Benutzer veränderbares Anzeigekriterium erfüllen, gemäß einer vorgegebenen Anzeigeregel mittels eines elektronischen Anzeigegeräts angezeigt werden. Die Erfindung betrifft ferner ein Computerprogrammprodukt zur Benutzung in einem Datennetz und/oder auf einer Datenverarbeitungseinheit, wobei das Computerprogrammprodukt ein oder mehrere computerlesbare Medien umfasst, die computerausführbare Anweisungen auf sich gespeichert haben.

Den Einsatz solcher Verfahren soll im Folgenden an einem ersten Beispiel verdeutlicht werden.

Social-Network-Betreiber setzen solche Visualisierungsverfahren ein, um benutzerspezifische Informationen in einem Web-Browser auf einem geeigneten Display darstellen zu lassen. Social-Network-Betreiber speichern benutzerspezifische Daten in Datenbanken. Meldet sich ein Benutzer über eine Internetseite des Social-Network-Betreibers bei dem Social-Network-Dienst unter Verwendung eines Benutzernamens und eines Passworts an, werden dem Benutzer in dem Web-Browser des Benutzers verschiedene Informationen beispielsweise über die Kontakte des Benutzers zu anderen Benutzern angezeigt. Der Benutzer hat nun die Möglichkeit, verschiedene andere Informationen, wie beispielsweise detaillierte persönliche Informationen über seine Kontakte in dem Web-Browser darstellen zu lassen.

Abhängig von der Anzahl der Kontakte des Benutzers können dem Benutzer eine Vielzahl Informationen über andere Benutzer zur Verfügung stehen. Die dem Benutzer insgesamt zur Verfügung stehenden Informationen aus dem Gesamtdatenbestand des Social-Network-Betreibers werden über Berechtigungen festgelegt. Diese Berechtigungen können nicht durch den Benutzer geändert werden, sondern setzen die Zustimmung eines oder mehrerer anderer Benutzer voraus. In diesem Fall könnte das Horizontkriterium beispielsweise folgendermaßen formuliert werden: "Ist der Benutzer berechtigt, eine bestimmte Information aus der Datenbank abzufragen?" Ist dieses Kriterium erfüllt, kann der Benutzer prinzipiell auf die Information zugreifen.

Auf Grund der unübersehbaren Vielzahl von Informationen, die das Horizontkriterium erfüllen können, werden dem Benutzer nicht alle Informationen zur gleichen Zeit dargestellt. Die dem Benutzer angezeigten Informationen erfüllen ein vom Benutzer veränderbares Anzeigekriterium. Möchte der Benutzer beispielsweise detaillierte persönliche Informationen eines anderen Benutzers des Social-Networks anzeigen lassen, so könnte das entsprechende Anzeigekriterium des Benutzers lauten: "Steht eine bestimmte in der Datenbank gespeicherte Information in Bezug zu dem anderen Benutzer des Social-Networks?"

Die Informationen, die das Horizontkriterium und das Anzeigekriterium erfüllen, werden dem Benutzer in einer durch den Social-Network-Betreiber vorgegebenen Form auf einem entsprechenden Display angezeigt.

Zur Darstellung unterschiedlicher Informationen kommen verschiedene Darstellungsformen wie Listen und Tabellen zum Einsatz. Das Erfassen sämtlicher Informationen beziehungsweise das Auffinden bestimmter Informationen in diesen Darstellungsformen ist für den Benutzer äußerst zeitaufwendig und ermüdend. Da die Darstellungsformen meistens je nach dargestelltem Informationstyp variieren, muss auch die Strukturierung und die Anzeige der Informationen von Informationstyp zu Informationstyp vom Benutzer neu interpretiert werden.

Anhand des ersten Beispiels wird deutlich, dass unterschiedliche, informationstypabhängige Darstellungsformen das Erfassen und Auffinden von Informationen erschweren.

Im Folgenden wird ein zweites Beispiel präsentiert, bei dem Informationen in einer einheitlichen Darstellungsform angezeigt werden.

Verfahren zur Visualisierung von Informationen werden auch zur Anzeige von Datei- und Ordnerstrukturen eines von mehreren Benutzern genutzten Personalcomputers eingesetzt. Durch den Benutzerlogin wird das Horizontkriterium definiert, nämlich die Dateien und Ordner, auf die der Benutzer Zugriff hat. Die von dem Benutzer auf dem PC anzeigbaren Ordner und Dateien werden in einer Baumstruktur auf einem entsprechenden Display dargestellt. Über Benutzereingaben kann der Benutzer den Inhalt der Ordner anzeigen lassen oder die Anzeige auf bestimmte Informationen einschränken. Durch seine Benutzereingaben bestimmt der Benutzer also das Anzeigekriterium. Dabei werden einem Benutzer die Informationen in einer einheitlichen Darstellungsform präsentiert.

Der Aufbau des Dateisystems und die Ablage der Dateien erfolgt nach beliebigen, meistens von dem Benutzer vorgegebenen Kriterien. Dabei steht ein Benutzer häufig vor dem Problem, dass Dateien nach verschiedenen Kriterien eingeordnet werden können. Beispielsweise können Dateien in einem Dateisystem nach dem Dokumenttyp organisiert werden. Dabei kommt zum Beispiel die Organisation der Dateien nach Bildern, Texten, Tabellen und Musik in Frage. Die Dateien könnten aber beispielsweise auch in private und geschäftliche Dateien gegliedert werden. Dies führt häufig zu weit verschachtelten Dateisystemen, die schnell unübersichtlich werden.

Um dies zu vermeiden werden Dateien häufig mehrfach und nach den unterschiedlichen Kriterien sortiert in dem Dateisystem abgelegt. Auf diese Weise entstehen schnell mehrere Versionen desselben Dokuments und es ist ein erheblicher Verwaltungsaufwand erforderlich, um die Aktualität sämtlicher Dateien sicherzustellen. Das hat häufig zur Folge, dass mit nicht mehr aktuellen Dateiversionen gearbeitet wird und aufeinander aufbauende Arbeitsergebnisse in verschiedenen Dateiversionen einer einzigen Ursprungsdatei abgelegt werden. Wird dies von dem Benutzer erkannt, können die unabhängig voneinander entwickelten Arbeitsergebnisse nicht oder nur mit erheblichen Aufwand wieder zusammengeführt werden.

Deshalb ist in modernen Dateisystemen häufig vorgesehen, dass an Stelle von Kopien von Dateien nur Verweise auf Dateien angelegt und nach den verschiedenen Kriterien sortiert im Dateisystem abgelegt werden können. Durch den Aufruf eines solchen Verweises wird die Originaldatei geöffnet. Sämtliche Veränderungen des Dateiinhalts werden auf diese Weise in nur einer Datei angelegt.

Dennoch wird die Darstellung der Dateisysteme in Baumstruktur häufig schnell unübersichtlich. Darüber hinaus ist es für einen Benutzer kaum möglich, zu unterscheiden, ob es sich um einen Verweis auf eine Datei oder um die Datei selbst handelt. Zudem muss der Benutzer dafür Sorge tragen, dass Verweise auf Dateien und nicht Kopien angelegt werden. Daher kann der Verwaltungsaufwand zur Sicherstellung, dass sämtliche Dateien auf einem aktuellen Stand sind, auch durch die Verwendung von Verweisen nicht gänzlich vermieden werden.

In dem zweiten Beispiel wurde unter anderem darauf hingewiesen, dass bei bekannten Visualisierungsverfahren Möglichkeiten zur Darstellung von Informationen unter verschiedenen Gesichtspunkten häufig nicht beziehungsweise nur eingeschränkt vorhanden sind, da die möglichen Darstellungsformen auf durch das Visualisierungsverfahren vorgegebene Strukturierungsmöglichkeiten beschränkt sind. Aufgabe der Erfindung ist es daher, ein Verfahren zur Visualisierung von strukturiert in einer Datenbank gespeicherten Informationen bereitzustellen, mit dem verschiedenste Informationen in einer einheitlichen Darstellungsform angezeigt werden und mit dem weitergehende Informationen schnell, unter verschiedenen Gesichtspunkten auffindbar sind.

Diese Aufgabe wird erfindungsgemäß dadurch gelöst, dass die Informationen als Segmente mindestens zweier Bänder in einer ersten Ansicht dargestellt werden, wobei die Bänder längs eines Rands einer zusammenhängenden Fläche angeordnet sind und die mindestens zwei Bänder den Rand weitestgehend oder vollständig umschließen. Auf diese Weise wird die zusammenhängende Fläche von den Bändern begrenzt. Diese Fläche kann zur Darstellung weiterer Informationen genutzt werden. Es hat sich als zweckmäßig erwiesen, dass ein Durchmesser dieser Fläche mindestens das Zweifache der Breite eines Bands beträgt, um ausreichend Fläche zur Darstellung weiterer Informationen zur Verfügung zu haben. Die Bänder können auch als Umrandung dieser Fläche angezeigt werden. Ein Band stellt einen langgestreckten, abgegrenzten Bereich einer Anzeige dar, der erheblich länger als breit ist. Mehrere Segmente können nebeneinander, der Länge des Bands nach, auf dem Band angeordnet werden. Die Größe der Segmente entspricht maximal der Größe eines Bands, falls auf einem Band jeweils nur eine Information dargestellt wird. Die minimale Größe der Segmente wird durch die Wahrnehmbarkeit der Segmente auf dem jeweiligen Anzeigegerät bestimmt und hängt daher von den technischen Anzeigemöglichkeiten des Anzeigegeräts ab.

Die Informationen können beispielsweise in Segmenten von vier, auf den vier Seitenrändern eines Quadrats angeordneten Bändern auf dem Anzeigegerät angezeigt werden. Es hat sich herausgestellt, dass gerade die Anzeige von Informationen in segmentierten Bändern, die an einer bestimmten Position auf dem Anzeigegerät angezeigt werden, einen Benutzer bei dem schnellen Auffinden der gesuchten Information unterstützen. Die Bänder und die Segmente können dabei unterschiedliche Farben aufweisen, um die schnelle Wahrnehmung der unterschiedlichen Informationen weiter zu vereinfachen.

Um beliebige Informationen schnell und unter verschiedenen Gesichtspunkten auffinden zu können, können die Informationen in Klassen eingeteilt werden. Die Bänder oder aber einzelne Segmente können dann bestimmten Klassen zugeordnet werden, so dass in diesen Bändern beziehungsweise Segmenten nur Informationen angezeigt werden, die der zugehörigen Klasse entsprechen.

Es ist auch möglich, die Bänder zur Strukturierung weitergehender Informationen zu nutzen und in den Segmenten Ordnungsbegriffe für die eigentlich gesuchten Informationen anzuzeigen. Beispielsweise könnte in den Segmenten eines ersten Bands Bezeichnungen von Dateiordnern angezeigt werden, die private Dateien enthalten und in den Segmenten eines zweiten Bands Dateiordner angezeigt werden, die Bilder enthalten.

Im Folgenden wird anhand eines Ausführungsbeispiels eine Möglichkeit zur Klassifizierung von Informationen beschrieben.

Zur Klassifizierung werden Klassen definiert, wobei jede beliebige Information einer beziehungsweise mehrerer dieser Klassen zugeordnet werden kann. Beispielsweise kommt die Einteilung der Informationen in Objekte, Prozesse, Aspekte, Beziehungen und Rollen in Betracht.

Objekte können als Gegenstände physischer Natur oder sogar als Abbildungen abstrakter Begriffe verstanden werden, die nicht vorgangsbezogen sind. Objekte können also beispielsweise natürliche und juristische Personen sein.

Prozesse beschreiben zeitliche Vorgänge der von einer Person erfahrbaren Welt. Prozesse beschreiben allgemein eine zeitliche Entwicklung also einen Hergang, Fortgang, Ablauf oder Vorgang. In der Industrie sind dies zum Beispiel Projekte oder Produktionen.

Aspekte sind Eigenschaften beziehungsweise Kategorien von Objekten und Prozessen und werden diesen zugeordnet. Die Aspekte werden in Abhängigkeit der Ihnen zugeordneten Informationen beziehungsweise Datensätzen weiter nach verschiedenen Gliederungsstrukturen wie zum Beispiel in Baumstruktur, Spaltenstruktur, Matrixstruktur oder Netzstruktur gegliedert. Die einzelnen Gliederungsknoten dieser Gliederung stellen dabei sogenannte Aspektknoten dar.

Mit den einzelnen Aspektknoten sind die mit Hilfe der Modellelemente strukturierten beziehungsweise klassifizierten Informationen verknüpft. Bei diesen Informationen kann es sich beispielsweise um die persönlichen Informationen einer der Kontakte eines Benutzers in einem Social-Network handeln. Die mit den Aspektknoten verknüpften Informationen können also ganz unterschiedlicher Art sein und beispielsweise Text, Tabellen, Bilder und andere Dokumente enthalten.

Die Rollen und Beziehungen werden dazu verwendet, ein rollenbasiertes Beziehungsnetz aufzubauen, das durch die Verbindung von Objekten und Prozessen miteinander entsteht. Dies geschieht über die Aspektknoten. Die Verknüpfung einer Beziehung mit einem Aspektknoten wird als Rolle bezeichnet. Somit weist jede Beziehung auch je zwei Rollen auf. Sollen beispielsweise Informationen über Projekte eines Unternehmens visualisiert werden, kann eine Beziehung die Zuordnung eines Aspektknotens "Herr Müller", des Aspekts "Mitarbeiter", des Objekts "Unternehmen" zu einem Aspektknoten "Vorbereitung", eines Aspekts "Beispielprojekt" des Prozesses "Forschung und Entwicklung" darstellen.

Da beispielsweise solche Zuordnungen von Mitarbeitern zu Projekten, die Projekte selbst und auch die Zugehörigkeit eines Mitarbeiters zu einem Unternehmen grundsätzlich nur für einen begrenzten Zeitraum gültig sind, können sämtliche Informationen auch jeweils eine Zeitinformation aufweisen, in der festgehalten wird, in welchem Zeitraum die jeweilige Information von Bedeutung oder Interesse ist beziehungsweise war.

In die Klassen des vorangehend exemplarisch beschriebenen Ausführungsbeispiels können sämtliche Informationen eingeordnet werden. Sind die Informationen beispielsweise nach diesen fünf Klassen klassifiziert, können auf vier Bändern, die auf den vier Seitenrändern eines Quadrats angeordnet und auf dem Anzeigegerät dargestellt sind, zum Beispiel die Objekte und Prozesse gegenübergestellt werden. Die zu den Objekten und Prozessen zugehörigen Aspekte können als weitere Segmente in den entsprechenden Bändern dargestellt werden. Die Zugehörigkeit der Aspekte zu bestimmten Objekten oder Prozessen kann beispielsweise durch eine Einfärbung der entsprechenden Segmente dargestellt werden. Auf diese Weise können sämtliche Informationen über die vier Bänder einfach zugänglich gemacht werden.

Beispielsweise könnte als Objekt ein "Unternehmen" definiert werden. Als diesem Objekt zugehöriger Aspekt könnten die "Mitarbeiter" des Objekts "Unternehmen" angesehen werden. Als weiterer Aspekt könnten beispielsweise "Kunden" des Objekts "Unternehmen" angesehen werden. Der Aspekt "Mitarbeiter" kann je nach Organisationsform des Objekts "Unternehmen" beispielsweise weiter in einer Matrixstruktur untergliedert sein. Die Aspekte werden also je nach den durch den jeweiligen Aspekt repräsentierten Informationen weiter untergliedert. Dabei können die Gliederungsknoten beziehungsweise Aspektknoten selbst Informationen repräsentieren oder ausschließlich zur weiteren Gliederung dienen. Bei dem Aspekt "Mitarbeiter" könnte jeder Aspektknoten die Informationen zu einem einzelnen Mitarbeiter enthalten. Die Gliederung könnte durch die jeweiligen Weisungsbefugnisse der Mitarbeiter innerhalb des Unternehmens bestimmt sein.

Durch die Zuordnung der Informationen zu den Klassen können die Informationen also zunächst so weit eingeordnet und auf den entsprechenden Bändern dargestellt werden, dass die weitere Navigation durch die Aspekte oder Selektion über die Aspekte deutlich vereinfacht wird. Zudem werden die Informationen in einer einheitlichen Darstellungsform dargestellt, so dass das Auffinden der gesuchten Information deutlich vereinfacht wird. Durch die Beziehungen kann zudem vermieden werden, dass Informationen mehrfach unter verschiedenen Gesichtspunkten abgespeichert werden müssen. Die Definition von Beziehungen zwischen Aspektknoten ermöglicht es, auf ein und dieselbe Information ausgehend von verschiedenen Objekten beziehungsweise Aspekten zuzugreifen. Zu diesem Zweck ist es hilfreich, die Beziehungen zwischen den Aspekten auf dem Anzeigegerät entsprechend zu kennzeichnen. So können beispielsweise auch unterschiedliche Farben oder andere Hervorhebungen der Segmente, mit denen Aspekte dargestellt werden, die zueinander in Beziehung stehende Aspektknoten beinhalten, genutzt werden.

Anhand des voranstehend beschriebenen Ausführungsbeispiels zur Klassifizierung von Informationen soll verdeutlicht werden, wie Informationen für eine besonders geschickte Visualisierung organisiert werden können.

Unabhängig von einer Klassifizierung der Informationen kann eine besonders intuitive Darstellungsform dadurch erreicht werden, dass zwei der Bänder jeweils einen Halbkreisring bilden und so angeordnet werden, dass die beiden Bereiche einen Kreisring bilden. Die von dem Kreisring umschlossene Fläche kann zum Beispiel dazu eingesetzt werden, ausgewählte, weiterführende Informationen anzuzeigen. Diese Fläche kann aber auch dazu verwendet werden, die Beziehungen von einander in Bezug stehenden Informationen zu visualisieren.

Um aus einer Vielzahl von Informationen dem Benutzer die gesuchte Information schnell und einfach zugänglich zu machen, kann weiter vorgesehen sein, dass das Anzeigekriterium durch eine Benutzerinformation geändert wird und Informationen, die das Horizontkriterium und das geänderte Anzeigekriterium erfüllen, gemäß der vorgegebenen Anzeigeregel mittels des elektronischen Anzeigegeräts als Segmente der mindestens zwei Bänder in einer zweiten Ansicht anstelle der ersten Ansicht dargestellt werden. Beispielsweise können die Position und die Größe der Bänder in der ersten Ansicht und der zweiten Ansicht gleich sein. Werden nun zum Beispiel in einem ersten Band in der ersten und der zweiten Ansicht Informationen angezeigt, die einer ersten Klasse zugeordnet sind und in einem zweiten Band in der ersten und der zweiten Ansicht Informationen die einer zweiten Klasse zugeordnet sind, so kann ein Benutzer eine Information in der zweiten Ansicht schnell einer Klasse zuordnen, da die einer Klasse zugeordneten Informationen in der ersten und der zweiten Ansicht in demselben Bereich auf dem Anzeigegerät angezeigt werden. Die Kennzeichnung der neuen Informationen kann beispielsweise aber auch durch die Farbgebung der Segmente oder andere gestalterische Elemente erfolgen.

Werden nach verschiedenen Klassen strukturierte Informationen dargestellt, wie beispielsweise Informationen, die in die im obigen Ausführungsbeispiel vorgestellten Klassen Objekte, Prozesse, Aspekte, Beziehungen und Rollen eingeteilt sind, so kann die Darstellung zum Beispiel auf Informationen beschränkt werden, die mit einem Objekt, einem Prozess, einem Aspekt oder einem beliebigen Aspektknoten in einer Beziehung stehen.

Beispielsweise könnten als Prozesse verschiedene Projekte eines Unternehmens bestimmt sein. Als Aspekte dieser Prozesse könnten beispielsweise die "Kostenkontrolle", die "Fortschrittskontrolle" und die "eigentliche Durchführung" der einzelnen Projekte angesehen werden.

Der Aspekt "Durchführung" könnte beispielsweise weiter untergliedert sein in die Aspektknoten "Vorbereitung", "Durchführung" und "Präsentation". Diesen einzelnen Aspektknoten können unterschiedliche Mitarbeiter des Unternehmens zugeordnet werden. Zwischen den einzelnen Aspektknoten des Aspekts "Mitarbeiter" und den Aspektknoten der Projekte des Unternehmens bestehen also Beziehungen.

Möchte ein Benutzer beispielsweise den Projektleiter eines bestimmten Projekts identifizieren, so kann er durch Einschränkung des Anzeigekriteriums auf Informationen, die in einer Beziehung zu dem entsprechenden Projekt stehen, die Darstellung so weit einschränken, dass der entsprechende Mitarbeiter schnell identifiziert werden kann.

Möchte ein Benutzer beispielsweise wissen, welchen Projekten ein bestimmter Mitarbeiter zugeordnet ist, so kann er die Darstellung durch die Einschränkung des Anzeigekriteriums auf Informationen, die in einer Beziehung zu dem entsprechenden Mitarbeiter stehen, einschränken.

Durch die Einschränkung auf wenige Datensätze, die in einer dem Benutzer gewohnten Darstellungsform präsentiert werden, kann ein Benutzer leicht durch die Vielzahl von Informationen navigieren.

Um die dargestellten Informationen auch in zeitlicher Hinsicht einschränken zu können, kann zudem vorgesehen sein, dass das Anzeigekriterium eine Zeitraumvorgabe aufweisen kann, die durch eine Benutzerinteraktion veränderbar ist, wobei durch die Zeitraumvorgabe bewirkt wird, dass nur Informationen dargestellt werden, die einen Bezug zu diesem Zeitraum aufweisen. So kann bereits bei der Darstellung der Informationen in der ersten Ansicht vorgesehen sein, dass nur solche Informationen in den Bändern dargestellt werden sollen, die einen Bezug beispielsweise zur letzten Woche haben. Um beispielsweise einen Projektverlauf bei der Visualisierung von Informationen eines Projekts analysieren zu können, kann der Zeitraum einfach auf den Gesamtzeitraum, den das Projekt beansprucht hat, verändert werden.

Um die Informationen auch einfach bezüglich der zwischen den Informationen vorhandenen Beziehungen einschränken zu können, kann vorgesehen sein, dass das Anzeigekriterium eine Informationsstandpunktvorgabe aufweisen kann, die mindestens eine Information bestimmt und durch eine Benutzerinteraktion veränderbar ist, wobei durch die Informationsstandpunktvorgabe bewirkt wird, dass nur Informationen dargestellt werden, die einen vorgebbaren Bezug zu der mindestens einen durch die Informationsstandpunktvorgabe bestimmten Information aufweisen. Werden die Informationen beispielsweise in die im obigen Ausführungsbeispiel vorgestellten Klassen Objekt, Prozess, Aspekt, Rolle und Beziehung eingeteilt, so könnte die Informationsstandpunktvorgabe der Beschränkung der angezeigten Informationen auf solche Informationen entsprechen, die beispielsweise mit einem bestimmten Aspektknoten in einer Beziehung stehen.

Um dem Benutzer die Möglichkeit zu geben, die angezeigten Informationen nach weiteren Gesichtspunkten einschränken zu können, kann das Anzeigekriterium auch eine Schlüsselwortvorgabe aufweisen, die mindestens ein Schlüsselwort bestimmt und durch eine Benutzerinteraktion veränderbar ist, wobei durch die Schlüsselvorgabe bewirkt wird, dass nur Informationen dargestellt werden, die dem mindestens einen Schlüsselwort zugeordnet werden können. Beispielsweise könnte ein Benutzer eines Social-Networks nur Informationen über Kontakte anzeigen lassen, die bestimmte Interessen in ihrem Benutzerprofil angegeben haben.

Um die Darstellung und Interaktion möglichst einfach zu gestalten, kann die zweite Ansicht automatisch nach einer Änderung des Anzeigekriteriums durch eine Benutzerinteraktion dargestellt werden. Das Anzeigekriterium kann beispielsweise mit Hilfe entsprechender, ebenfalls auf dem Anzeigegerät dargestellter Bedienelemente verändert werden. Zu diesem Zweck könnte zum Beispiel eine Computermaus eingesetzt werden. Dabei kommt insbesondere eine Interaktion mit den verschiedenen, in den Bändern dargestellten Segmenten in Betracht. In diesem Fall interagiert der Benutzer mit im Bereich der einzelnen Segmente angeordneten Bedienelementen, so dass er eine Veränderung der in den Bändern dargestellten Informationen unmittelbar wahrnehmen kann. Die automatische Anzeige der zweiten Ansicht erleichtert daher den Umgang mit der grafischen Anzeige.

Zur Darstellung von beliebigen Beziehungen zwischen Informationen kann zudem vorgesehen sein, dass Informationen über vorgebbare Beziehungen zwischen zwei anderen Informationen als Verbindungslinien dargestellt werden, die zwei Segmente miteinander verbinden.. Zudem kann auch eine Benutzerinteraktionsmöglichkeit mit diesen Linien vorgesehen sein. Auf diese Weise können beispielsweise einfach durch Anklicken der entsprechenden Verbindungslinien Informationen über die jeweilige Beziehung abgerufen werden.

Um dem Benutzer eine weitere Möglichkeit zu geben, die darstellbaren Informationen einschränken zu können, kann das Horizontkriterium zum Beispiel auch aus einer Menge von Horizontkriterien durch den Benutzer ausgewählt werden. Auf diese Weise kann einfach durch die Informationen unterschiedlicher Informationsebenen navigiert werden. Beispielsweise können bei der Visualisierung von Unternehmensinformationen aus Konzernsicht andere Informationen des Unternehmens von Interesse sein als aus Sicht eines bestimmten Geschäftsbereichs.

Um die verschiedenen in den Bändern dargestellten Segmente einfacher bestimmten Informationsklassen zuordnen zu können und um die Hauptdatensatzbezeichnungen grafisch voneinander zu trennen, kann vorgesehen sein, dass die Informationen Hauptdatensatzbezeichnungen von Hauptdatensätzen oder Unterdatensatzbezeichnungen von diesen Hauptdatensätzen zugeordneten Unterdatensätzen sein können, wobei die Hauptdatensatzbezeichnungen auf einer ersten Seite bezüglich einer das Band der Länge nach unterteilenden Trennlinie in dem Band angeordnet werden und die Unterdatensatzbezeichnungen auf einer der ersten Seite gegenüberliegenden zweiten Seite in dem Band angeordnet werden.

Bei den Hauptdatensätzen kann es sich beispielsweise um Datensätze handeln, die gemäß dem obigen Ausführungsbeispiel in Objekte und Prozesse eingeteilt wurden. Unterdatensätze wären demnach den Objekten und Prozessen zugeordnete Aspekte. Um die einzelnen Objekte, Prozesse und Aspekte identifizieren zu können, sollten diesen Bezeichnungen oder grafische Identifikationselemente zugeordnet werden, die in den Segmenten angezeigt werden.

Beispielsweise kann in einem ein Unternehmen kennzeichnenden Segment nur der Name des Unternehmens angezeigt werden. Weitere, das Unternehmen kennzeichnende Informationen, wie dessen Anschrift, könnten beispielsweise nach einer Benutzerinteraktion mit dem entsprechenden Segment in einem weiteren Anzeigeelement auf dem Anzeigegerät, beispielsweise in Form eines Datenblatts, dargestellt werden.

Werden für die Anzeige beispielsweise vier, auf den vier Seitenrändern eines Quadrats angeordnete Bänder verwendet, so können die Objekte und zugehörigen Aspekte in einem oberen Band dargestellt werden und die Prozesse und zugehörigen Aspekte im Unteren. Zur Trennung der Objekte und Aspekte können die Objekte beispielsweise auf einer oberen Seite des Bands dargestellt werden und die zugehörigen Aspekte auf der unteren Seite des Bands. Auf die gleiche Weise können die Prozesse von den Prozessen zugehörigen Aspekten grafisch getrennt auf dem unteren Band dargestellt werden. Das linke und das rechte Band können zur Darstellung weiterer Informationen genutzt werden.

Um die Zugehörigkeit von Unterdatensätzen zu bestimmten Hauptdatensätzen grafisch zu kennzeichnen, kann erfindungsgemäß weiter vorgesehen sein, dass eine Länge eines einen Hauptdatensatzbezeichnung darstellenden Segments an eine Summe der Länge der zu dieser Hauptdatensatzbezeichnung zugehörigen Unterdatensatzbezeichnungen darstellenden Segmente anpassbar ist. Die Hauptdatensatzbezeichnungen und zugehörigen Unterdatensatzbezeichnungen werden also jeweils in Blöcken dargestellt, wobei ein Block jeweils eine Hauptdatensatzbezeichnung mit den zugehörigen Unterdatensatzbezeichnungen beziehungsweise die diese Bezeichnung enthaltenen Segmente umfasst.

Um die verschiedenen Informationen grafisch unterschiedlichen Informationstypen zuzuordnen, kann weiter vorgesehen sein, dass Hauptdatensatzbezeichnungen von Hauptdatensätzen unterschiedlicher Datentypen in verschiedenen Bändern angeordnet werden. Eine Aufteilung der Informationen auf verschiedene Bänder erfolgt also zum Beispiel nach der Zugehörigkeit zu einer Hauptklasse. Beispielsweise können die Objekte in einem anderen Band dargestellt werden als die Prozesse.

Vorteilhafterweise kann weiter vorgesehen sein, dass Informationen über vorgebbare Beziehungen zwischen zwei Unterdatensätzen als Verbindungslinien zwischen diesen Unterdatensätzen dargestellt werden.

Vorteilhafterweise kann weiter vorgesehen sein, dass die Hauptdatensatzbezeichnungen auf einer Außenseite des Kreisrings angeordnet werden und die Unterdatensatzbezeichnungen auf einer Innenseite des Kreisrings angeordnet werden.

Vorteilhafterweise kann weiter vorgesehen sein, dass Informationen über vorgebbare Beziehungen zwischen zwei anderen Informationen als Verbindungslinien dargestellt werden, die zwei Segmente miteinander verbinden, wobei die Verbindungslinien innerhalb eines durch den Kreisring gebildeten Kreises angezeigt werden.

Ein gesondertes oder zusammen mit geeigneter Hardware handelsfähiges Computerprogrammprodukt ist vorteilhafterweise so ausgestaltet, dass die durch einen Prozessor ausgeführten Anweisungen das Datennetz und/oder die Datenverarbeitungseinheit dazu veranlassen, das erfindungsgemäße Verfahren auszuführen.

Weitere Einzelheiten der Erfindung werden in den Zeichnungen anhand der schematisch dargestellten Ausführungsbeispiele beschrieben.

Es zeigt:
Fig. 1 eine schematische Darstellung eines Flussdiagramms zur Beschreibung einzelner Verfahrensschritte des Visualisierungsverfahrens,
Fig. 2a eine schematische Darstellung zweier, einen Kreisring bildender Bänder,
Fig. 2b die in Fig. 3a dargestellte schematische Darstellung mit einer weiteren Unterteilung der Bänder,
Fig. 2c die in Fig. 3b dargestellte schematische Darstellung mit einer Unterteilung der Bänder in Segmente,
Fig. 3 die in der Fig. 2c dargestellte schematische Darstellung mit Verbindungslinien und mit zusätzlichen Anzeigeelementen,
Fig. 4 eine schematische Darstellung dreier auf dem Rand eines Dreiecks angeordneter Bänder,
Fig. 5 eine schematische Darstellung der in Fig. 3 dargestellten Bänder mit weiteren Anzeigeelementen, die auf einem Anzeigegerät angezeigt werden.

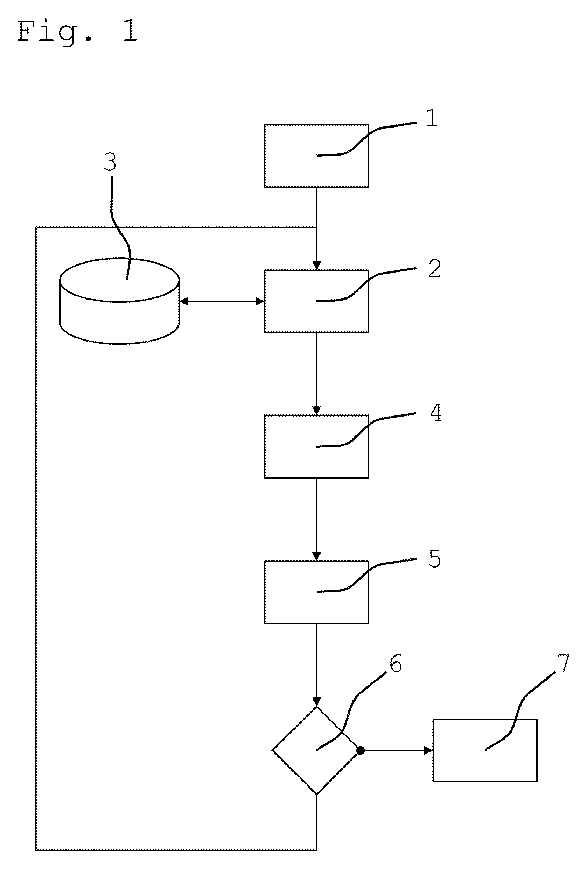

In Fig. 1 ist eine schematische Darstellung eines Flussdiagramms zur Beschreibung einzelner Verfahrensschritte des Visualisierungsverfahrens dargestellt. In einem ersten Verfahrensschritt 1 authentifiziert sich ein Benutzer bei einer Internetseite, bei der das erfindungsgemäße Verfahren zur Visualisierung von Informationen eingesetzt wird.

Ausgehend von einem durch den Benutzerlogin vorgegebenen Horizontkriterium und einem Anzeigekriterium werden in einem zweiten Verfahrensschritt 2 Informationen aus der Datenbank 3 abgerufen, die den beiden Kriterien entsprechen. Diese Informationen werden in einem dritten Verfahrensschritt 4 gemäß einer von dem Betreiber der Internetseite vorgegebenen Anzeigeregel auf einem Computerbildschirm des Benutzers angezeigt.

Sobald der Benutzer durch eine Benutzereingabe mit der auf dem Bildschirm dargestellten Internetseite beispielsweise durch Anklicken eines Bedienelements mit der Maus oder der Eingabe eines Suchworts interagiert (Verfahrensschritt 5), wird die Eingabe in einem Verfahrensschritt 6 dahingehend überprüft, ob durch die Eingabe das Anzeigekriterium verändert wurde.

Ist dies nicht der Fall, wird eine der in Verfahrensschritt 5 registrierten Benutzereingabe zugeordnete sonstige Aktion durchgeführt (Verfahrensschritt 7). Dabei kann es sich beispielsweise um die Anzeige eines Dokuments in einer entsprechenden Anwendung, wie zum Beispiel einem Textverarbeitungsprogramm, handeln.

Wird durch die Benutzereingabe hingegen das Anzeigekriterium beispielsweise durch Wahl eines Informationsstandpunkts oder eines Anzeigezeitraums verändert, wird das Verfahren automatisch mit dem Verfahrensschritt 2 fortgeführt.

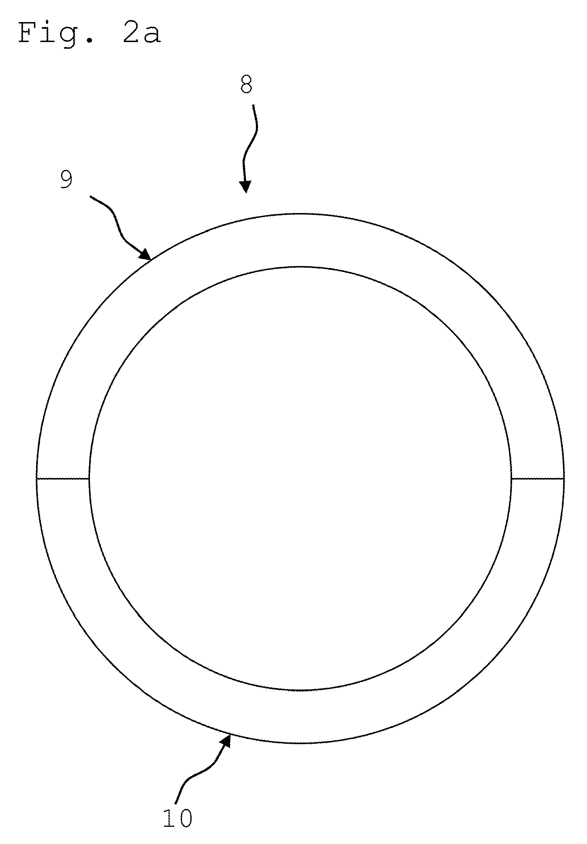

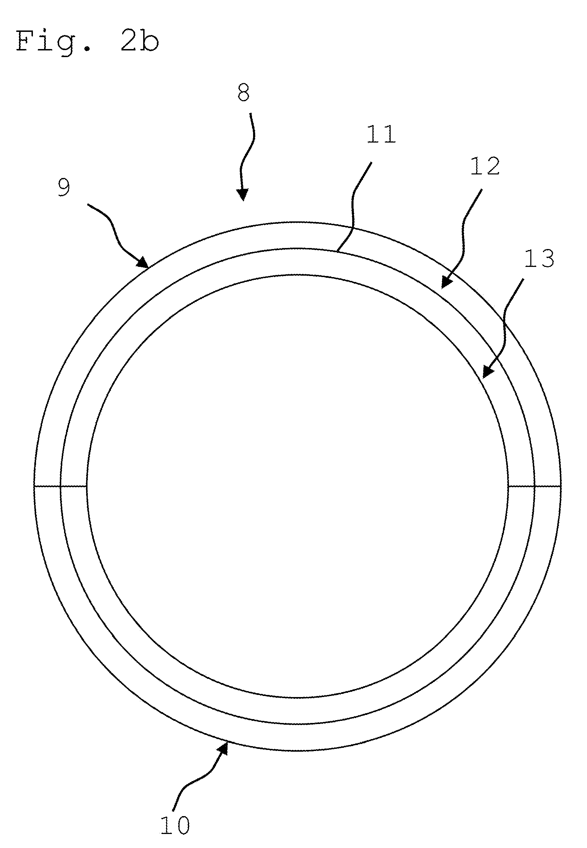

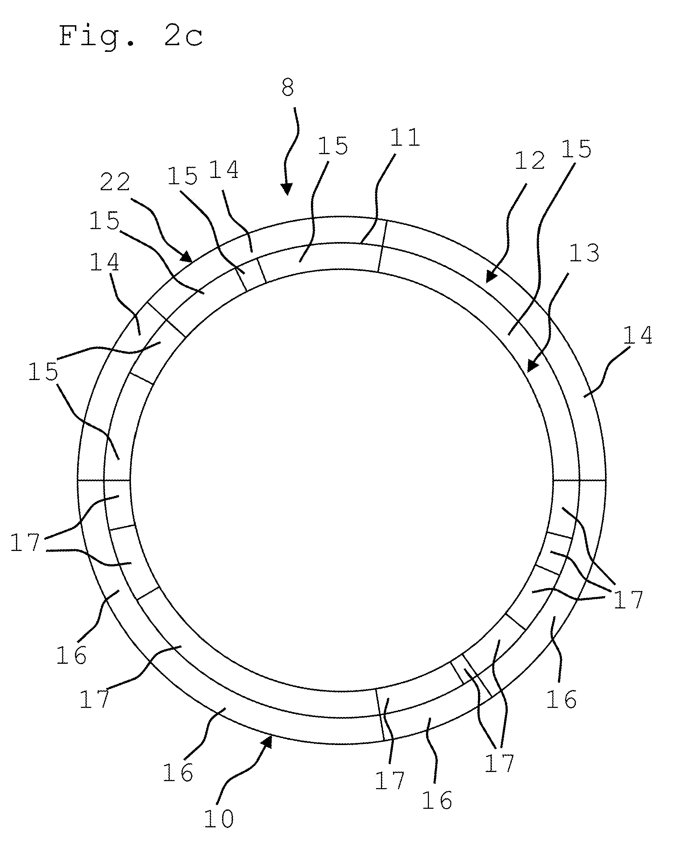

Die Figuren 2a, 2b und 2c zeigen in unterschiedlichen Detaillierungsstufen schematische Darstellungen zweier, einen Kreisring 8 bildender Bänder.

In Fig. 2a ist ein oberer Halbkreisring 9 und ein unterer Halbkreisring 10 dargestellt. Der obere Halbkreisring 9 ist blau und der untere Halbkreisring 10 orange eingefärbt.

In Fig. 2b ist zusätzlich eine Trennlinie 11 dargestellt, die einen äußeren halbkreisförmigen Bereich 12 von einem inneren halbkreisförmigen Bereich 13 abgrenzt.

Fig. 2c zeigt schematisch die in Fig. 2b dargestellten Halbkreisringe beziehungsweise halbkreisförmigen Bereiche um Segmente erweitert. In den Segmenten 14 des äußeren, durch die Trennlinie 11 abgegrenzten halbkreisförmigen Bereichs 12 sind die Bezeichnungen von Prozessen, wie beispielsweise "Projekt A" dargestellt. In den Segmenten 15 des inneren halbkreisförmigen Bereichs 13 sind die zu den Prozessen zugehörigen Aspekte dargestellt. Der innere halbkreisförmigen Bereich 13 und der äußere halbkreisförmigen Bereich 12 sind durch verschiedene Blautöne gekennzeichnet. In den äußeren Segmenten 16 des orange eingefärbten unteren Halbkreisrings 10 werden die Bezeichnungen von Objekten, wie zum Beispiel "Kunde A" angezeigt. Die inneren Segmente 17 enthalten die zugehörigen Aspekte, wie beispielsweise den Aspekt "Mitarbeiter". Die inneren Segmente 17 und äußeren Segmente 16 weisen unterschiedliche Orangetönungen auf.

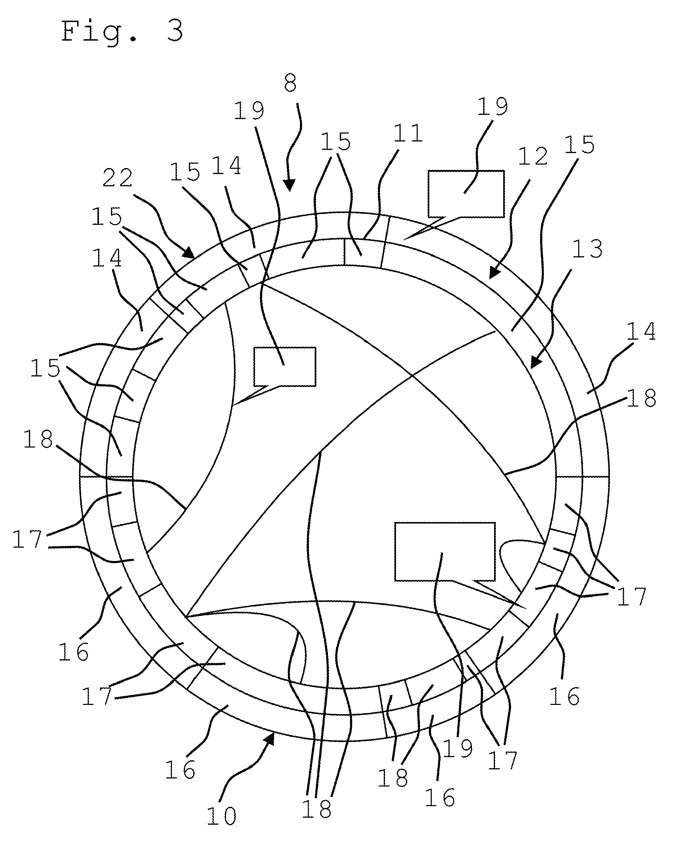

In Fig. 3 ist der in Fig. 2c dargestellte Kreisring 8 mit weiteren Segmenten, Verbindungslinien 18 und Anzeigeelementen 19 dargestellt. Die Verbindungslinien 18 verlaufen innerhalb des durch die beiden Halbkreisringe geformten Kreisrings 8. Diese Verbindungslinien 18 kennzeichnen die Beziehungen zwischen Aspektknoten.

Die Anzeigeelemente 19 werden nach Anklicken eines der Segmente oder der Verbindungslinien auf dem Anzeigegerät dargestellt. In diesen Anzeigeelementen 19 werden die dem angeklickten Element (Segmente oder Verbindungslinien) untergeordneten und mit dem angeklickten Element in Beziehung stehenden Elemente angezeigt.

Durch Anklicken der Elemente in den Anzeigeelementen 19 kann durch die Informationen bis zu den Aspektknoten navigiert werden. Zu diesem Zweck werden die Anzeigeelemente 19 nach Anklicken eines Elements entsprechend aktualisiert.

Mit Hilfe entsprechender zusammen mit den Elementen angezeigten Standpunktwahlbedienelemente kann der Informationsstandpunkt des zugehörigen Elements gewählt werden. Nach Wahl eines Informationsstandpunkts ändert sich die Darstellung. In dem oberen Halbkreisring 9 werden weiterhin die Prozesse und zugehörigen Aspekte angezeigt und in dem unteren Halbkreisring 10 die Objekte und zugehörigen Aspekte. Allerdings werden nur noch die Objekte, Prozesse, Aspekte und Beziehungen dargestellt, die mit dem gewählten Element (Objekt, Prozess, Aspekt, Aspektknoten) in einer Beziehung stehen.

Auf die gleiche Weise ändert sich die Darstellung bei Vorgabe eines Zeitraums oder eines Schlüsselworts.

Die Breite der Segmente ist an die den Segmenten untergeordneten Informationen angepasst. Die Breite eines Objektsegments beziehungsweise eines Prozesssegments entspricht der Breite aller dem Objektsegment beziehungsweise dem Prozesssegment zugeordneten Aspekte.

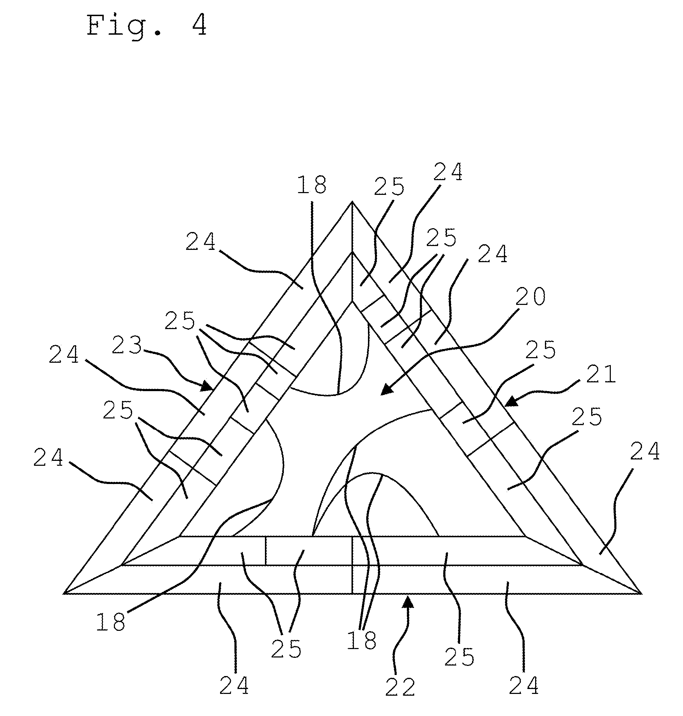

In Fig. 4 ist eine schematische Darstellung dreier, einen dreieckigen Bereich 20 umschließende Bänder 21, 22 und 23 dargestellt. In den Bändern 21, 22, 23 sind Hauptdatensatzbezeichnungen enthaltene äußere Segmente 24 und Unterdatensatzbezeichnungen enthaltene innere Segmente 25 dargestellt. In dem dreieckigen Bereich 20 sind die, die inneren Segmente 25 verbindenden Verbindungslinien 18 dargestellt.

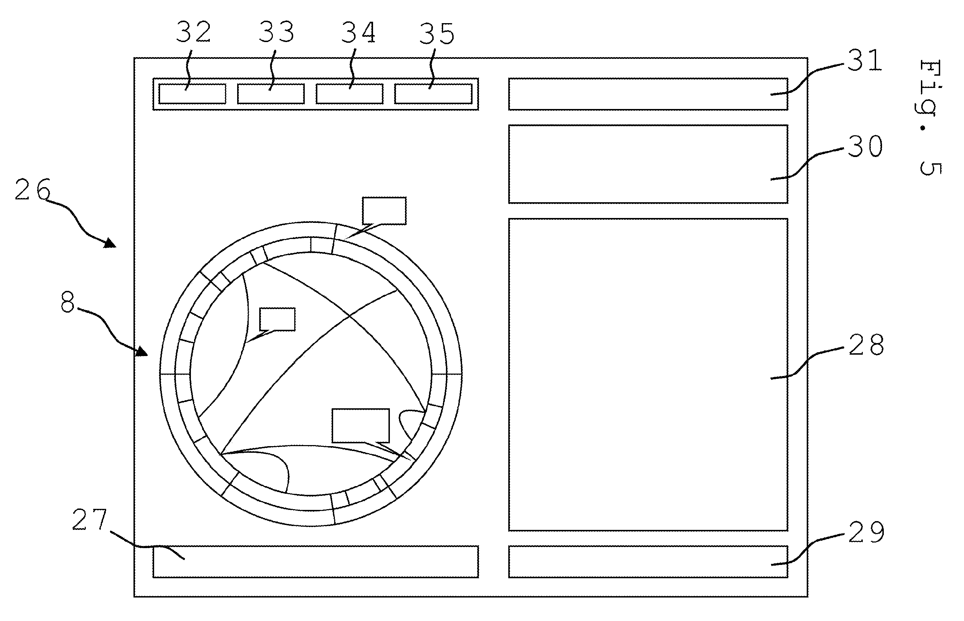

Fig. 5 zeigt eine schematische Darstellung der in Fig. 3 dargestellten Bänder mit weiteren Anzeigeelementen, die auf einem Anzeigegerät 26 angezeigt werden. Zugunsten einer übersichtlicheren Darstellung sind die Bezugszeichen der in dem Kreisring 8 dargestellten Segmente und Verbindungslinien nicht mit in die Figur aufgenommen worden. Die Darstellung des Kreisrings 8 entspricht der Darstellung des Kreisrings 8 in der Fig. 3. Zusätzlich zu den bereits erläuterten Elementen des Kreisrings 8 sind in dieser Darstellung weitere Anzeigeelemente enthalten. Mit Hilfe eines Eingabefelds zur Zeitraumauswahl 27 kann der anzuzeigende Zeitraum vorgegeben werden.

Informationen über das aktuell durch Anklicken aktivierte Objekt, den Prozess, den Aspekt, die Beziehung, die Rolle oder den Aspektknoten werden in einem Datenblatt 28 angezeigt. In diesem Datenblatt 28 können unterschiedlichste Informationen in verschiedenen Darstellungsformen wie zum Beispiel in Listen- und Tabellenform dargestellt werden. Die Datenblätter 28 können auch Verweise auf weiterführende Dateien wie beispielsweise mit einem entsprechenden Textverarbeitungsprogramm bearbeitbare Dokumente enthalten. Durch Anklicken der Verweise kann ein zugehöriges Anwendungsprogramm gestartet werden.

Mit Hilfe eines Zeitschiebers 29 können zeitbezogene Versionen des Datenblatts angezeigt werden.

In Datenblättern 28 von Beziehungen können die entsprechenden Beziehungen über Berechtigungen bestimmt werden.

In einem Aspektstrukturanzeigebereich 30 wird ein durch Anklicken aktivierter Aspekt angezeigt. Durch eine beziehungsweise mehrere aufeinanderfolgende Benutzerinteraktionen mit den in dem Aspektstrukturanzeigebereich 30 angezeigten Elementen kann durch die gesamte Aspektgliederung mit allen Aspektknoten navigiert werden.

In einem Anzeigebereich 31 sind weitere Bedienelemente wie zum Beispiel ein Bedienelement zum Abmelden des aktuellen Benutzers angeordnet.

Mit Hilfe der Bedienelemente 32, 33, 34 und dem Eingabefeld 35 können verschiedene Schlüsselwörter vorgegeben werden. Die mit den Bedienelementen 32, 33 und 34 vorgebbaren Schlüsselwörter sind dabei fest vorgegeben. Mit Hilfe des Eingabefelds 35 kann der Benutzer ein beliebiges Schlüsselwort vorgeben.

## Patentansprüche

1. Verfahren zur Visualisierung von Informationen, die als Datensätze in mindestens einer Datenbank (3) gespeichert sind, wobei Informationen, die ein benutzerspezifisches, nicht von einem Benutzer veränderbares Horizontkriterium sowie ein benutzerspezifisches, durch den Benutzer veränderbares Anzeigekriterium erfüllen, gemäß einer vorgegebenen Anzeigeregel mittels eines elektronischen Anzeigegeräts (26) angezeigt werden, **dadurch gekennzeichnet, dass** die Informationen als Segmente (14, 15) mindestens zweier Bänder (21, 22, 23) in einer ersten Ansicht dargestellt werden, wobei die Bänder (21, 22, 23) längs eines Rands einer zusammenhängenden Fläche angeordnet sind und die mindestens zwei Bänder (21, 22, 23) den Rand weitestgehend oder vollständig umschließen.

2. Verfahren gemäß Anspruch 1, **dadurch gekennzeichnet, dass** zwei Bänder (21, 22, 23) jeweils einen Halbkreisring bilden und so angeordnet werden, dass die beiden Bänder einen Kreisring (8) bilden.

3. Verfahren gemäß Anspruch 1 oder 2, **dadurch gekennzeichnet, dass** das Anzeigekriterium durch eine Benutzerinteraktion geändert wird und Informationen die das Horizontkriterium und das geänderte Anzeigekriterium erfüllen gemäß der vorgegebenen Anzeigeregel mittels des elektronischen Anzeigegeräts (26) als Segmente (14, 15) der mindestens zwei Bänder (21, 22, 23) in einer zweiten Ansicht anstelle der ersten Ansicht dargestellt werden.

4. Verfahren gemäß Anspruch 3, **dadurch gekennzeichnet, dass** das Anzeigekriterium eine Zeitraumvorgabe aufweisen kann, die durch eine Benutzerinteraktion veränderbar ist, wobei durch die Zeitraumvorgabe bewirkt wird, dass nur Informationen dargestellt werden, die einen Bezug zu diesem Zeitraum aufweisen.

5. Verfahren gemäß Anspruch 3 oder 4, **dadurch gekennzeichnet, dass** das Anzeigekriterium eine Informationsstandpunktvorgabe aufweisen kann, die mindestens eine Information bestimmt und durch eine Benutzerinteraktion veränderbar ist, wobei durch die Informationsstandpunktvorgabe bewirkt wird, dass nur Informationen dargestellt werden, die einen vorgebaren Bezug zu der mindestens einen durch die Informationsstandpunktvorgabe bestimmten Information aufweisen.

6. Verfahren gemäß einem der voranstehenden Ansprüche, **dadurch gekennzeichnet, dass** Informationen über vorgebbare Beziehungen zwischen zwei anderen Informationen als Verbindungslinien (18) dargestellt werden, die zwei Segmente (14, 15) miteinander verbinden.

7. Verfahren gemäß einem der voranstehenden Ansprüche, **dadurch gekennzeichnet, dass** die Informationen Hauptdatensatzbezeichnungen von Hauptdatensätzen oder Unterdatensatzbezeichnungen von diesen Hauptdatensätzen zugeordneten Unterdatensätzen sein können, wobei die Hauptdatensatzbezeichnungen auf einer ersten Seite bezüglich einer das Band der Länge nach unterteilenden Trennlinie (11) in dem Band angeordnet werden und die Unterdatensatzbezeichnungen auf einer der ersten Seite gegenüberliegenden zweiten Seite in dem Band angeordnet werden.

8. Verfahren gemäß Anspruch 7, **dadurch gekennzeichnet, dass** eine Länge eines eine Hauptdatensatzbezeichnung darstellenden Segments an eine Summe der Längen der zu dieser Hauptdatensatzbezeichnung zugehörigen Unterdatensatzbezeichnungen darstellenden Segmente anpassbar ist.

9. Verfahren gemäß einem der Ansprüche 7 bis 8, **dadurch gekennzeichnet, dass** Hauptdatensatzbezeichnungen von Hauptdatensätzen unterschiedlicher Datentypen in verschiedenen Bändern (21, 22, 23) angeordnet werden.

10. Verfahren gemäß einem der Ansprüche 7 bis 9, **dadurch gekennzeichnet, dass** Informationen über vorgebbare Beziehungen zwischen zwei Unterdatensätzen als Verbindungslinien (18) zwischen diesen Unterdatensätzen dargestellt werden.

11. Verfahren gemäß einem der Ansprüche 7 bis 10, **dadurch gekennzeichnet, dass** die Hauptdatensatzbezeichnungen auf einer Außenseite des Kreisrings (8) angeordnet werden und die Unterdatensatzbezeichnungen auf einer Innenseite des Kreisrings (8) angeordnet werden.

12. Verfahren gemäß einem der Ansprüche 2 bis 11, **dadurch gekennzeichnet, dass** Informationen über vorgebbare Beziehungen zwischen zwei anderen Informationen als Verbindungslinien (18) dargestellt werden, die zwei Segmente (14, 15) miteinander verbinden, wobei die Verbindungslinien (18) innerhalb eines durch den Kreisring (8) gebildeten Kreises angezeigt werden.

13. Computerprogrammprodukt zur Benutzung in einem Datennetz und/oder auf einer Datenverarbeitungseinheit, wobei das Computerprogrammprodukt ein oder mehrere computerlesbare Medien umfasst, die computerausführbare Anweisungen auf sich gespeichert haben, die, wenn sie durch einen Prozessor ausgeführt werden, das Datennetz und/oder die Datenverarbeitungseinheit dazu veranlassen, das Verfahren gemäß der Ansprüche 1 bis 12 auszuführen.
